Europäisches Patentamt

European Patent Office

Office européen des brevets

(19)

(11) **EP 1 173 515 B1**

(12) **EUROPÄISCHE PATENTSCHRIFT**

(45) Veröffentlichungstag und Bekanntmachung des Hinweises auf die Patenterteilung:
**24.11.2004 Patentblatt 2004/48**

(51) Int Cl.⁷: **C08L 51/04**, C08L 55/02,
C08L 25/00, C08K 5/36

(21) Anmeldenummer: **00936689.9**

(22) Anmeldetag: **06.04.2000**

(86) Internationale Anmeldenummer:
**PCT/EP2000/003061**

(87) Internationale Veröffentlichungsnummer:
**WO 2000/063290 (26.10.2000 Gazette 2000/43)**

(54) **THERMOPLASTISCHE ANTISTATISCH AUSGERÜSTETE FORMMASSEN MIT VERBESSERTER FARBSTABILITÄT BEI DER VERARBEITUNG**

THERMOPLASTIC MOULDING COMPOUNDS, PROVIDED WITH AN ANTISTATIC AGENT WHICH EXHIBIT IMPROVED COLOUR STABILITY DURING PROCESSING

MATIERES MOULABLES THERMOPLASTIQUES COMPORTANT UN COMPOSANT ANTISTATIQUE ET PRESENTANT UNE MEILLEURE STABILITE DE COULEUR LORS DE LEUR TRAVAIL

(84) Benannte Vertragsstaaten:
**DE ES FR GB IT NL**

(30) Priorität: **19.04.1999 DE 19917568**

(43) Veröffentlichungstag der Anmeldung:
**23.01.2002 Patentblatt 2002/04**

(73) Patentinhaber: **Bayer Aktiengesellschaft**
**51368 Leverkusen (DE)**

(72) Erfinder:
• **WILLENBERG, Bernd**
  **D-51469 Bergisch Gladbach (DE)**
• **EICHENAUER, Herbert**
  **D-41539 Dormagen (DE)**
• **ALBERTS, Heinrich**
  **D-51519 Odenthal (DE)**

(56) Entgegenhaltungen:
EP-A- 0 603 147          WO-A-00/18841
US-A- 5 061 752          US-A- 5 064 899
US-A- 5 102 939          US-A- 5 225 465

**Beschreibung**

Gegenstand der Erfindung sind thermoplastische antistatisch ausgerüstete Formmassen mit verbesserter Farbstabilität bei der Verarbeitung auf Basis von gegebenenfalls kautschukmodifizierten Polymerisaten aus Vinylaromaten, z.B. Styrol und/oder α-Methylstyrol und Acrylnitril und/oder Acrylaten, die eine speziell zusammengesetzte Kombination aus Antistatikum und phenolischem Antioxidans enthalten.

Die meisten Kunststoffe sind aufgrund ihrer chemische Konstitution elektrische Isolatoren mit einem hohen elektrischen Oberflächenwiderstand. Das führt bei der Verarbeitung und im Gebrauch solcher Massen leicht zur elektrostatischen Aufladung der Kunststoffoberflächen. Die Folge sind vielfältige Störungen und Belästigungen in der Praxis, z.B. schnelle Verschmutzung und Verstaubung der Kunststoffteile, wobei sich charakteristische Staubfiguren an der Oberfläche ausbilden. Dies gilt im besonderen Maß auch für gegebenenfalls kautschukmodifizierte als Formmassen verwendete Polymerisate aus Vinylaromaten und Acrylnitril, z.B. Styrol-Acrylnitril-Copolymerisate (SAN) und Pfropfpolymerisate von Styrol und Acrylnitril auf Polybutadien (ABS).

Die antistatische Ausrüstung solcher Formmassen ist bekannt. Als antistatische Mittel werden z.B. Alkyl- und Arylsulfonate (DE-OS 1 544 652), Amine (DE-PS 1 258 083), quartäre Ammoniumsalze, Amide, Phosphorsäuren sowie Alkyl- und Arylphosphonate, Polyether (DE-PS 1 244 398) und durch Pfropfpolymerisation von Styrol und Acrylnitril auf solche Polyether hergestellte Produkte (EP-A 61 692) empfohlen.

Besonders bewährt haben sich mit Radikalbildnern modifizierte Polyether (EP-A 278 349).

Doch auch bei Einsatz dieser Materialien kann ebenso wie bei Verwendung von unmodifiziertem Polyether als Antistatikum trotz optimal stabilisierter Ausgangspolymerisate bei thermoplastischer Verarbeitung eine nicht ausreichende Farbstabilität der antistatisch ausgerüsteten Formmassen auftreten.

Überraschend wurde nun gefunden, daß eine sehr gute Kombination aus Antistatik-Wirkung und hoher Farbstabilität ohne negative Beeinflussung der sonstigen Eigenschaften erreicht wird, wenn eine speziell zusammengesetzte Kombination aus Antistatikum auf Basis von Polyether und speziellem phenolischem Antioxidans verwendet wird.

Gegenstand der Erfindung sind thermoplastische Formmassen, enthaltend

I.) 99,90 bis 95 Gew.-Teile, vorzugsweise 99,75 bis 96 Gew.-Teile und besonders bevorzugt 99,50 bis 97 Gew.-Teile eines gegebenenfalls kautschukmodifizierten Polymerisats aus Vinylaromaten und gegebenenfalls anderen Vinylmonomeren bestehend aus

A) 0 bis 100 Gew.-% eines oder mehrerer Pfropfpolymerisate aus 10 bis 95 Gew.-% (bezogen auf A) Kautschuk und 90 bis 5 Gew.-% (bezogen auf A) auf den Kautschuk pfropfpolymerisierte Monomere, wobei als Monomere Styrol, α-Methylstyrol, kernsubstituiertes Styrol, Methylmethacrylat, (Meth)Acrylnitril, Maleinsäureanhydrid, N-substituierte Maleinimide oder Mischungen daraus pfropfpolymerisiert sind und die Kautschuke Glasübergangstemperaturen < 10°C aufweisen und in Form wenigstens partiell vernetzter Teilchen mit einem mittleren Teilchendurchmesser ($d_{50}$) von 0,05 bis 20 μm vorliegen
und
B) 100 bis 0 Gew.-% eines oder mehrerer thermoplastischer Vinylpolymerisate, wobei die Monomeren ausgewählt sind aus der Reihe Styrol, α-Methylstyrol, kernsubstituiertem Styrol, Methylmethacrylat, Acrylnitril, Methacrylnitril, Maleinsäureanhydrid, N-substituierte Maleinimide oder Mischungen daraus, und

II.) 0,10 bis 5 Gew.-Teile, vorzugsweise 0,25 bis 4 Gew.-Teile und besonders bevorzugt 0,5 bis 3 Gew.-Teile eines Gemisches aus

a) einer Komponente ausgewählt aus mindestens einer aus der Gruppe der unmodifizierten Polyalkylenether, mit Radikalbildner modifizierten Polyalkylenether und mit Säuregruppen modifizierten Polyalkylenether (jeweils mit Molekulargewichten (Zahlenmittel) zwischen 500 und 20 000) und

b) einem phenolischen Antioxidans ausgewählt aus Octadecyl-3-(3',5'-ditert.-butyl-4-hydroxyphenyl)propionat und 2,4-Dimethyl-6-(1-methylpentadecyl)-phenol oder eine Mischung daraus, wobei das Gewichtsverhältnis (a):(b) 20:1 bis 1:1 beträgt.

Ein weiterer Gegenstand der Erfindung ist ein Verfahren zur Herstellung von verbesserten gegebenenfalls kautschukmodifizierten Polymerisaten von Vinylaromaten und anderen Vinylmonomeren, wie oben beschrieben, das dadurch gekennzeichnet ist, daß man zu 99,90 bis 95 Gew.-Teilen Polymerisat I.) 0,10 bis 5 Gew.-Teile eines Gemisches aus a) einer Komponente ausgewählt aus mindestens einer aus der Gruppe der unmodifizierten Polyalkylenether, mit Radikalbildner modifizierten Polyalkylenether und mit Säuregruppen modifizierten Polyalkylenether (jeweils mit Molekulargewichten (Zahlenmittel) zwischen 500 und 20 000) und b) einem phenolischen Antioxidans ausgewählt aus Octadecyl-3-(3',5'-di-tert.-butyl-4-hydroxyphenyl)propionat und 2,4-Dimethyl-6-(1-methylpentadecyl)-phenol oder Mischungen daraus, wobei das Gewichtsverhältnis (a):(b) 20:1 bis 1:1 beträgt, zufügt und im Schmelzezustand vermischt.

Gegebenenfalls kautschukmodifizierte Copolymerisate aus Vinylaromaten und anderen Vinylmonomeren (I) im Sinne der Erfindung sind Mischungen aus (A) 0 bis 100 Gew.-% eines oder mehrerer Pfropfpolymerisate und (B) 100 bis 0 Gew.-% eine oder mehrerer thermoplastischer Vinylpolymerisate.

Pfropfpolymerisate (A) im Sinne der Erfindung sind solche, in denen auf einen Kautschuk entweder Styrol, α-Methylstyrol, Methylmethacrylat kernsubstituiertes, Styrol, (Meth)Acrylnitril, Maleinsäureanhydrid, N-substituiertes Maleinimide der Mischungen daraus pfropfpolymerisiert sind oder in denen eine Mischung von 95 bis 50 Gew.-% Styrol, α-Methylstyrol, kernsubstituiertem Styrol, Methylmethacrylat oder Mischungen daraus und 5 bis 50 Gew.-% (Meth) Acrylnitril, Maleinsäureanhydrid, N-substituierte Maleinimide oder Mischungen daraus pfropfpolymerisiert sind.

Geeignete Kautschuke sind praktisch alle Kautschuke mit Glasübergangstemperaturen < 10°C. Beispiele sind Polybutadien, Polyisopren, Styrol-Butadien-Copolymerisate, Acrylnitril-Butadien-Copolymerisate, Acrylatkautschuke, EPM-Kautschuke (Ethylen/Propylen-Kautschuke) und EPDM-Kautschuke (Ethylen/Propylen/Dien-Kautschuke), die als Dien ein nichtkonjugiertes Dien, wie z.B. Hexadien-1,5 oder Norbornadien, in kleinen Mengen enthalten. Bevorzugt sind Dienkautschuke.

Die Pfropfmischpolymerisate (A) enthalten 10 bis 95 Gew.-%, insbesondere 20 bis 70 Gew.-%, Kautschuk und 90 bis 5 Gew.-% , insbesondere 80 bis 30 Gew.-%, pfropfcopolymerisierte Monomere. Die Kautschuke liegen in diesen Pfropfmischpolymerisaten in Form wenigstens partiell vernetzter Teilchen eines mittleren Teilchendurchmessers ($d_{50}$) von 0,05 bis 20 μm, bevorzugt 0,1 bis 2 μm und besonders bevorzugt 0,1 bis 0,8 μm, vor.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid-Z. und Z. Polymere 250 (1972), 782-796) bestimmt werden.

Derartige Pfropfmischpolymerisate können durch radikalische Pfropfcopolymerisation von Styrol, α-Methylstyrol, kernsubstituiertem Styrol, (Meth)Acrylnitril, Methylmethacrylat, Maleinsäureanhydrid, N-substituiertem Maleinimid in Gegenwart der zu pfropfenden Kautschuke hergestellt werden. Bevorzugte Herstellungsverfahren sind die Emulsions-, Lösungs-, Masse- oder Suspensionspolymerisation.

Die Copolymerisate (B) können aus den Pfropfmonomeren für (A) oder ähnlichen Monomeren durch Polymerisation aufgebaut werden, insbesondere aus Styrol, α-Methylstyrol, kernhalogeniertes Styrol, Acrylnitril, Methacrylnitril, Methylmethacrylat, Maleinsäureanhydrid, N-substituiertem Maleinimid oder Mischungen daraus. Es handelt sich bevorzugt um Copolymerisate aus 95 bis 50, vorzugsweise 60 bis 80 Gew.-% Styrol, α-Methylstyrol, Methylmethacrylat oder Mischungen daraus mit 5 bis 50, vorzugsweise 40 bis 20 Gew.-% Acrylnitril, Methacrylnitril, Methylmethacrylat, Maleinsäureanhydrid oder Mischungen daraus. Solche Copolymerisate entstehen auch bei der Pfropfmischpolymerisation als Nebenprodukte. Es ist üblich, neben den in Pfropfpolymerisat enthaltenen Copolymeren noch getrennt hergestellte Copolymere zuzumischen.

Diese müssen nicht mit den in den Pfropfpolymeren vorliegenden ungepfropften Harzanteilen chemisch identisch sein. Geeignete getrennt hergestellte Copolymere sind harzartig, thermoplastisch und kautschukfrei; es sind insbesondere Copolymere aus Styrol und/oder α-Methylstyrol mit Acrylnitril, gegebenenfalls in Mischung mit Methylmethacrylat. Besonders bevorzugte Copolymerisate bestehen aus 20 bis 40 Gew.-% Acrylnitril und 80 bis 60 Gew.-% Styrol oder α-Methylstyrol. Solche Copolymerisate sind bekannt und lassen sich insbesondere durch radikalische Polymerisation, insbesondere durch Emulsions-, Suspensions-, Lösungs- oder Massepolymerisation herstellen. Die Copolymerisate besitzen vorzugsweise Molekulargewichte ($\overline{M}_w$) von 15.000 bis $2 \cdot 10^5$, bestimmt durch Lichtstreuung oder Gelpermeationschromatographie.

Die Herstellung der Pfropf- und Copolymere ist allgemein bekannt (vgl. z.B. DE-OS 1 694 173 (= US-A 3 564 077), DE-OS 2 348 377 (= US-A 3 919 353), DE-OS 2 035 390 (= US-A 3 644 574), DE-OS 2 228 242 (= GB- 1 409 275)).

Erfindungsgemäß geeignete Polyalkylenether a) für die Komponente II.) sind z.B. unmodifizierte Polyalkylenether, die aus di- und polyfunktionellen aliphatischen oder cycloaliphatischen Resten aufgebaut sind und in geringerem Maße auch olefinische Gruppen enthalten können.

Geeignet sind Reaktionsprodukte aus Di- oder Polyolen, Ethylenglykol, 1,2-Propylenglykol, Trimethylolpropan, Glycerin, Pentaerythrit, Sorbit und Mannit und einem oder mehreren Alkylenoxiden, wie Ethylenoxid und Propylenoxid (Herstellung und Verwendung siehe Ullmanns Encyklopädie der technischen Chemie, 4. Aufl., Bd.19, S.31, Verlag Chemie, Weinheim 1980). Polyalkylenether mit hohen Anteilen an 1,2-Propylenstrukturen werden bevorzugt.

Es können sowohl lineare als auch verzweigte Polyalkylenether verwendet werden, wobei mäßig verzweigte und lineare Typen bevorzugt werden.

Die unmodifizierten Polyalkylenether besitzen Molekulargewichte (Zahlenmittel) zwischen 500 und 20 000, bevorzugt zwischen 1 000 und 15 000 und besonders bevorzugt zwischen 2 000 und 10 000 und ganz besonders bevorzugt zwischen 2 000 und 5 000, die Bestimmung der Molekulargewichte erfolgt üblicherweise durch Messung der OH-Zahl.

Als Komponente II.a) sind auch mit Radikalbildner modifizierte Polyalkylenether und mit Säuregruppen modifizierte Polyalkylenether geeignet. Mit Radikalbildner modifizierte Polyalkylenether sind in EP-A 278 349 beschrieben.

Als Ausgangsmaterial zur Herstellung der mit Säuregruppen modifizierten Polyalkylenether dienen die oben genannten unmodifizierten Polyalkylenether.

Als Carbonsäuren zur Behandlung der unmodifizierten Polyalkylenether kommen prinzipiell aliphatische, vorzugsweise mit 1 bis 20 Kohlenstoffatomen, aromatische und araliphatische Carbonsäuren sowie deren Anhydride in Betracht. Dabei können gesättigte und ungesättigte Mono-, Di- und Tricarbonsäuren eingesetzt werden.

Beispiele für geeignete Carbonsäuren sind Ameisensäure, Essigsäure, Propionsäure, Trimethylessigsäure, Laurinsäure, Ölsäure, Stearinsäure, Oxalsäure, Malonsäure, Bernsteinsäure, Glutarsäure, Adipinsäure, Maleinsäure, Fumarsäure, Benzoesäure, Phenylessigsäure, o-, m- oder p-Toluylsäure, Phthalsäure, Isophthalsäure, Terephthalsäure.

Beispiele für geeignete Carbonsäureanhydride sind Acetanhydrid, Maleinsäureanhydrid, Phthalsäureanhydrid.

Prinzipiell geeignet sind auch Carbonsäurederivate wie Hydroxycarbonsäuren (z.B. Glykolsäure, Milchsäure, Hydroxybuttersäure, Glycerinsäure, Apfelsäure, Weinsäure, Citronensäure, Mandelsäure, Salicylsäure oder 2,2'-Thiodiessigsäure und 3,3'-Thiodipropionsäure.

Bevorzugte Carbonsäuren im Sinne der Erfindung sind Ameisensäure, Essigsäure, Propionsäure, Oxalsäure, Benzoesäure, Phthalsäure, besonders bevorzugt sind Ameisensäure, Essigsäure, Oxalsäure und Benzoesäure; ganz besonders bevorzugt ist Essigsäure.

Bevorzugte Carbonsäureanhydride im Sinne der Erfindung sind Acetanhydrid und Phthalsäureanhydrid.

Die Behandlung der Polyalkylenether mit Carbonsäure bzw. Carbonsäureanhydrid erfolgt im allgemeinen bei Temperaturen von 20°C bis 100°C, vorzugsweise von 25°C bis 90°C, besonders bevorzugt 30°C bis 80°C und ganz besonders bevorzugt 40°C bis 60°C.

Die Menge an Carbonsäure bzw. Carbonsäureanhydrid, bezogen auf die Menge an Polyalkylenether, kann in weiten Bereichen variiert werden. Sie beträgt im allgemeinen 0,01 bis 3 Gew.-%, vorzugsweise 0,02 bis 2 Gew.-% und besonders bevorzugt 0,05 bis 1 Gew.-%.

Erfindungsgemäß geeignete phenolische Antioxidantien II.b) sind Octadecyl-3-(3',5'di-tert.-butyl-4-hydroxyphenyl)propionat und 2,4-Dimethyl-6-(1-methylpentadecyl)-phenol bzw. deren Gemische. Die Verbindungen sind allgemein bekannt und käuflich erhältlich (s. Beispiele).

Die Komponenten a) und b) in II.) werden im Gewichtsverhältnis (a):(b) = 20:1 bis 1:1, vorzugsweise 15:1 bis 2:1 und besonders bevorzugt 10:1 bis 3:1 eingesetzt.

Die Einarbeitung von II.) in I.) kann beliebig nach bekannten Methoden erfolgen. So kann bei Vorliegen der Komponente I.) in Emulsionsform (z.B. nach Herstellung von I.) nach den bekannten Verfahren der Emulsionspolymerisation) die Komponente II.) der Emulsion zugesetzt werden. Ebenso ist es möglich, eine der in II.) vorliegenden Komponenten der Emulsion zuzusetzen und die andere Komponente in die Schmelze einzuarbeiten.

Vorzugsweise wird II.) durch gemeinsames Kneten, Walzen oder Extrudieren in die antistatisch auszurüstenden Polymeren eingearbeitet.

Neben der Komponente II.) können den erfindungsgemäßen Formmassen die üblichen Zusätze wie z.B. Pigmente, Füllstoffe, Gleitmittel, Entformungsmittel, Flammschutzmittel und dergleichen zugesetzt werden.

Die so erhaltenen erfindungsgemäßen Formmassen werden mit den für Thermoplaste üblichen Methode (z. B. Spritzgießen, Extrudieren etc.) zu Fertigteilen (z.B. Gehäuseteilen für Haushalts- und Elektrogeräte, Profilteilen, Folien, Automobilinnenausstattungen etc.) verarbeitet.

Die fertigen Formteile zeichnen sich durch hervorragendes antistatisches Verhalten sowie eine sehr hohe Farbstabilität bei der Verarbeitung aus, wobei die sonstigen Eigenschaften (Mechanik, Wärmeformbeständigkeit, thermoplastische Verarbeitbarkeit) nicht beeinträchtigt werden.

**Beispiele**

**Eingesetzte Materialien**

ABS-Polymerisat 1

ABS-Polymer aufgebaut aus 70 Gew.-Teilen eines thermoplastischen Styrol/Acrylnitril-Copolymeren (Styrol: Acrylnitril-Gew.-Verhältnis 72:28, gewichtsmittleres Molekulargewicht $\overline{M}_w$ = 85 000, bestimmt durch Gelpermeationschromatographie) und 30 Gew.-Teilen eines Pfropfpolymeren von 32,4 Gew.-Teilen Styrol und 12,6 Gew.-Teilen Acrylnitril auf 55 Gew.-Teile Polybutadien mit einer bimodalen Teilchengrößenverteilung (50 % mit $d_{50}$-Wert von ca. 400 nm und 50 % mit $d_{50}$-Wert von ca. 100 nm), wobei das Pfropfpolymerisat mit 0,8 % Octadecyl-3-(3',5'-di-tert.-butyl-4-hydroxyphenyl)propionat (Irganox 1076, Ciba, Basel, Schweiz) stabilisiert ist.

ABS-Polymerisat 2

ABS-Polymer aufgebaut analog ABS-Polymerisat 1, wobei das Pfropfpolymerisat mit 0,8 % einer Mischung aus 2,4-Dimethyl-6-(1-methylpentadecyl)-phenol und Octadecyl-3-(3',5'-di-tert.-butyl-4-hydroxyphenyl)propionat (Gew.-Verhältnis 4:1, Irganox 1141, Ciba, Basel, Schweiz) stabilisiert ist.

ABS-Polymerisat 3

ABS-Polymer aufgebaut analog ABS-Polymerisat 1, wobei das Pfropfpolymerisat mit 0,4 % 2,2'-Methylen-bis-(4-methyl-6-cyclohexyl-phenol) (Vulkanox ZKF, Bayer AG, Leverkusen, Deutschland) stabilisiert ist.

ABS-Polymerisat 4

ABS-Polymer aufgebaut analog ABS-Polymerisat 1, wobei das Pfropfpolymerisat mit 0,4 % 4,4'-Thiobis (6-tert.-butyl-m-cresol) (Santonox TBMC, Flexsys GmbH & Co. KG, Nienburg, Deutschland) stabilisiert ist.

Polyalkylenether 1

Mit Dibenzoylperoxid als Radikalbildner gemäß EP-A 278 349 modifizierter linearer Polypropylenether mit einer mittleren Molmasse $\overline{M}_n$ = 2 000 (OH-Zahl = 57).

Polyalkylenether 2

Linearer Polypropylenether mit einer mittleren Molmasse $\overline{M}_n \approx$ 4 200 (OH-Zahl = 27) (Desmophen 5168, Bayer AG, Leverkusen, Deutschland).

Antistatikum (Vergleich)

Trishydroxyethyliertes Dodecylamin

Phenolisches Antioxidans (AO) 1

Octadecyl-3-(3',5'-di-tert.-butyl-4-hydroxyphenyl)propionat (Irganox 1076, Ciba, Basel, Schweiz).

Phenolisches Antioxidans (AO) 2 (Vergleich)

2,2'-Methylen-bis-(4-methyl-6-cyclohexyl-phenol) (Vulkanox ZKF, Bayer AG, Leverkusen, Deutschland).

Phenolisches Antioxidans (AO) 3

2,4-Dimethyl-6-(1-methylpentadecyl)-phenol (Zu 80 % in Irganox 1141, Ciba, Basel, Schweiz, enthalten).

Phenolisches Antioxidans (AO) 4 (Vergleich)

4,4'-Thiobis (6-tert.-butyl-m-cresol) (Santonox TBMC, Flexsys GmbH & Co.KG, Nienburg, Deutschland).

**Herstellung von antistatisch ausgerüsteten Formmassen**

Die ABS-Polymerisate werden zusammen mit 2 Gew.-Teilen Ethylenbisstearylamid und 0,15 Gew.-Teilen eines Silikonöls sowie den in Tabelle 1 angegebenen Komponenten in einem Innenkneter vom Banbury-Typ bei ca. 190°C bis 200°C vermischt; die Verarbeitung der resultierenden, in Granulatform überführten Massen erfolgte durch Spritzgießen bei 240°C bzw. 280°C zu Formteilen der Abmessungen 140 mm x 75 mm x 2 mm.

Die Farbstabilität bei der Verarbeitung wird durch Messung des Yellowness-Index (YI) gemäß ASTM-Norm D 1925 (Lichtart: C, Beobachter: 2°, Meßöffnung: Large Area Value) nach der Gleichung YI = (128X-106Z)/Y, mit X, X, Z = Farbkoordinaten gemäß DIN 5033 an den nach dem Spritzgießvorgang vorliegenden Teilen sowie nach einer 5-stündigen Ofenlagerung der Teile bei 100°C ermittelt (siehe Tabelle 2).

Die Antistatikwirkung wird durch Lagern der Formteile in staubiger Umgebung (2 Wochen) ermittelt (+ = sehr gute Antistatikwirkung, keinerlei Staubfiguren, - = schlechte Antistatikwirkung, Staubfiguren).

Die in Tabelle 2 zusammengestellten Resultate zeigen, daß nur die erfindungsgemäßen Formmassen eine gute Verarbeitungsstabilität (praktisch keine Veränderung des Yellowness-Index bei Erhöhung der Verarbeitungstemperatur) und eine gute Stabilität bei Wärmelagerung (maximale Veränderung des Yellowness-Index von ca. 5 Einheiten) bei gleichzeitiger guter Antistatikwirkung aufweisen.

**Tabelle 1** Abmischungen bei Herstellung der untersuchten ABS-Formmassen

| Beispiel | ABS-Poly-merisat 1 (Gew.-Tl.) | ABS-Poly-merisat 2 (Gew.-Tl.) | ABS-Poly-merisat 3 (Gew.-Tl.) | ABS-Poly-merisat 4 (Gew.-Tl.) | Polyalkylen-ether 1 (Gew.-Tl.) | Polyalkylen-ether 2 (Gew.-Tl.) | Antistatikum (Vergleich) (Gew.-Tl.) | Phenol AO 1 (Gew.-Tl.) | Phenol AO 2 (Gew.-Tl.) | Phenol AO 3 (Gew.-Tl.) | Phenol AO 4 (Gew.-Tl.) |
|---|---|---|---|---|---|---|---|---|---|---|---|
| 1*) | 100 | - | - | - | 1,5 | - | - | 0,24**) | - | - | - |
| 2 (Vergl.)*) | - | - | 100 | - | 1,5 | - | - | - | 0,12**) | - | - |
| 3 (Vergl.)*) | 100 | - | - | - | - | - | - | 0,24**) | - | - | - |
| 4 (Vergl.)*) | - | - | 100 | - | - | - | - | - | 0,12**) | - | - |
| 5 (Vergl.)*) | 100 | - | - | - | - | - | 1 | 0,24**) | - | - | - |
| 6 (Vergl.)*) | - | - | 100 | - | - | - | 1 | - | 0,12**) | - | - |
| 7 | - | - | 100 | - | 1,5 | - | - | 0,5 | 0,12**) | - | - |
| 8 (Vergl.) | - | - | 100 | - | - | - | 1 | 0,5 | 0,12**) | - | - |
| 9 (Vergl.) | - | - | 100 | - | 1,5 | - | - | - | 0,5+0,12**) | - | - |
| 10 | 100 | - | - | - | - | 1,5 | - | 0,24**) | - | - | - |
| 11 | - | 100 | - | - | 1,5 | - | - | 0,048**) | - | 0,192**) | - |
| 12 | - | 100 | - | - | - | 1,5 | - | 0,048**) | - | 0,192**) | - |
| 13 (Vergl.) | - | 100 | - | - | - | - | 1 | 0.048**) | - | 0,192**) | - |
| 14 (Vergl.) | - | - | - | 100 | 1,5 | - | - | - | - | - | 0,12**) |
| 15 (Vergl.) | - | - | - | 100 | - | 1,5 | - | - | - | - | 0,12**) |

*)    Bei der Herstellung der Formmassen wurden zusätzlich 0,5 Gew.-Teile Magnesiumstearat eingesetzt

**)    Im jeweils eingesetzten ABS-Polymerisat enthalten.

EP 1 173 515 B1

Tabelle 2

| Beispiel | YI nach Verarbeitung bei 240°C | YI nach Verarbeitung bei 280°C | YI nach Ofenlagerung (5 h bei 100°C) | Antistatik-Verhalten |
|---|---|---|---|---|
| Eigenschaften der untersuchten ABS-Formmassen | | | | |
| 1 | 34 | n.b. | 37 | + |
| 2 (Vergleich) | 38 | n.b. | 45 | + |
| 3 (Vergleich) | 35 | n.b. | 40 | - |
| 4 (Vergleich) | 35 | n.b. | 40 | - |
| 5 (Vergleich) | 40 | n.b. | 49 | + |
| 6 (Vergleich) | 41 | n.b. | 48 | + |
| 7 | 33 | n.b. | 36 | + |
| 8 (Vergleich) | 39 | n.b. | 50 | + |
| 9 (Vergleich) | 38 | n.b. | 46 | + |
| 10 | 29 | 28 | 32 | + |
| 11 | 33 | 31 | 36 | + |
| 12 | 26 | 27 | 31 | + |
| 13 (Vergleich) | 39 | 38 | 46 | + |
| 14 (Vergleich) | 38 | 39 | 48 | + |
| 15 (Vergleich) | 40 | 40 | 50 | + |
| n.b. = nicht bestimmt | | | | |

**Patentansprüche**

1. Thermoplastische Formmassen enthaltend

I.) 99,90 bis 95 Gew.-Teile eines gegebenenfalls kautschukmodifizierten Polymerisats aus Vinylaromaten und gegebenenfalls anderen Vinylmonomeren bestehend aus

A) 0 bis 100 Gew.-% eines oder mehrerer Pfropfpolymerisate aus 10 bis 95 Gew.-% (bezogen auf A) Kautschuk und 90 bis 5 Gew.-% (bezogen auf A) auf den Kautschuk pfropfpolymerisierte Monomere, wobei als Monomere Styrol, $\alpha$-Methylstyrol, kernsubstituiertes Styrol, Methylmethacrylat, (Meth)-Acrylnitril, Maleinsäureanhydrid, N-substituierte Maleinimide oder Mischungen daraus pfropfpolymerisiert sind und die Kautschuke Glasübergangstemperaturen < 10°C aufweisen und in Form wenigstens partiell vernetzter Teilchen mit einem mittleren Teilchendurchmesser ($d_{50}$) von 0,05 bis 20 $\mu$m vorliegen und

B) 100 bis 0 Gew.-% eines oder mehrerer thermoplastischer Vinylpolymerisate, wobei die Monomeren ausgewählt sind aus der Reihe Styrol, $\alpha$-Methylstyrol, kernsubstituiertern Styrol, Methylmethacrylat, Acrylnitril, Methacrylnitril, Maleinsäureanhydrid, N-substituierte Maleinimide oder Mischungen daraus, und

II.) 0,10 bis 5 Gew.-Teile eines Gemisches aus

a) einer Komponente ausgewählt aus mindestens einer aus der Gruppe der unmodifizierten Polyalkylenether, mit Radikalbildner modifizierten Polyalkylenether und mit Säuregruppen modifizierten Polyalkylenether (jeweils mit Molekulargewichten (Zahlenmittel) zwischen 500 und 20 000) und

b) einem phenolischen Antioxidans ausgewählt aus Octadecyl-3-(3',5'-di-tert.-butyl-4-hydroxyphenyl)propionat und 2,4-Dimethyl-6-(1-methylpentadecyl)-phenol oder Mischungen daraus, wobei das Gewichtsverhältnis (a):(b) 20:1 bis 1:1 beträgt.

2. Thermoplastische Formmassen gemäß Anspruch 1 enthaltend

I.) 99,75 bis 96 Gew.-Teile eines gegebenenfalls kautschukmodifizierten Polymerisats aus Vinylaromaten und gegebenenfalls anderen Viny-Imonomeren bestehend aus

A) 0 bis 100 Gew.-% eines oder mehrerer Pfropfpolymerisate aus 10 bis 95 Gew.-% (bezogen auf A) Kautschuk und 90 bis 5 Gew.-% (bezogen auf A) auf den Kautschuk pfropfpolymerisierte Monomere, wobei als Monomere Styrol, $\alpha$-Methylstyrol, kernsubstituiertes Styrol, Methylmethacrylat, (Meth)-Acrylnitril, Maleinsäureanhydrid, N-substituierte Maleinimide oder Mischungen daraus pfropfpolymerisiert sind und die Kautschuke Glasübergangstemperaturen < 10°C aufweisen und in Form wenigstens partiell vernetzter Teilchen mit einem mittleren Teilchendurchmesser ($d_{50}$) von 0,05 bis 20 μm vorliegen und

B) 100 bis 0 Gew.-% eines oder mehrerer thermoplastischer Vinylpolymerisate, wobei die Monomeren ausgewählt sind aus der Reihe Styrol, $\alpha$-Methylstyrol, kernsubstituiertern Styrol, Methylmethacrylat, Acrylnitril, Methacrylnitril, Maleinsäureanhydrid, N-substituierte Maleinimide oder Mischungen daraus, und

II.) 0,25 bis 4 Gew.-Teile eines Gemisches aus

a) einer Komponente ausgewählt aus mindestens einer aus der Gruppe der unmodifizierten Polyalkylenether, mit Radikalbildner modifizierten Polyalkylenether und mit Säuregruppen modifizierten Polyalkylenether (jeweils mit Molekulargewichten (Zahlenmittel) zwischen 500 und 20 000) und

b) einem phenolischen Antioxidans ausgewählt aus Octadecyl-3-(3',5'-di-tert.-butyl-4-hydroxyphenyl)propionat und 2,4-Dimethyl-6-(1-methylpentadecyl)-phenol oder Mischungen daraus, wobei das Gewichtsverhältnis (a):(b) 20:1 bis 1:1 beträgt.

3. Thermoplastische Formmassen gemäß Anspruch 1, enthaltend Additive, ausgewählt aus mindestens einem der Gruppe der Pigmente, Füllstoffe, Gleitmittel, Entformungsmittel und Flammschutzmittel.

4. Verwendung der Formmassen gemäß Anspruch 1 zur Herstellung von Formkörpem.

5. Formkörper, erhältlich aus Formmassen gemäß Anspruch 1.

6. Verfahren zur Herstellung von gegebenenfalls kautschukmodifizierten Polymerisaten aus Vinylaromaten, anderen Vinylmonomeren und üblichen Zusätzen gemäß Anspruch 1, **dadurch gekennzeichnet, daß** man zu 99,90 bis 95 Gew.-Teilen Polymerisat I.) 0,10 bis 5 Gew.-Teile eines Gemisches aus den Komponenten a) und b) im Gewichtsverhältnis (a):(b) = 20:1 bis 1:1 zufügt und im Schmelzezustand vermischt.

**Claims**

1. Thermoplastic moulding compositions comprising

I.) 99.90 to 95 parts by weight of an optionally rubber-modified polymer of vinylaromatics and optionally other vinyl monomers, composed of

A) 0 to 100% by weight of one or more graft polymers of 10 to 95% by weight (with respect to A) of rubber and 90 to 5% by weight (with respect to A) of monomers graft-polymerized onto the rubber, monomers graft polymerized comprising styrene, $\alpha$-methylstyrene, ring-substituted styrene, methyl methacrylate, (meth)acrylonitrile, maleic anhydride, N-substituted maleimides or mixtures thereof and the rubbers having glass transition temperatures < 10°C and being present in the form of at least partially crosslinked particles having an average particle diameter ($d_{50}$) of 0.05 to 20 μm and

B) 100 to 0% by weight of one or more thermoplastic vinyl polymers, the monomers being selected from the group consisting of styrene, $\alpha$-methylstyrene, ring-substituted styrene, methyl methacrylate, acrylonitrile, (meth)acrylonitrile, maleic anhydride, N-substituted maleimides or mixtures thereof, and

II.) 0.10 to 5 parts by weight of a mixture of

a) a component selected from at least one polyalkylene ether from the group consisting of unmodified polyalkylene ethers, polyalkylene ethers modified with radical formers, and polyalkylene ethers modified with acid groups (each of molecular weights (number average) of between 500 and 20 000) and

b) a phenolic antioxidant selected from octadecyl 3-(3',5'-di-tert-butyl-4-hydroxyphenyl)propionate and 2,4-dimethyl-6-(1-methylpentadecyl)phenol or mixtures thereof, where the ratio by weight of (a):(b) is 20: 1 to 1:1.

2. Thermoplastic moulding compositions according to Claim 1 comprising

I.) 99.75 to 96 parts by weight of an optionally rubber-modified polymer of vinylaromatics and optionally other vinyl monomers, composed of

A) 0 to 100% by weight of one or more graft polymers of 10 to 95% by weight (with respect to A) of rubber and 90 to 5% by weight (with respect to A) of monomers graft-polymerized onto the rubber, monomers graft polymerized comprising styrene, $\alpha$-methylstyrene, ring-substituted styrene, methyl methacrylate, (meth)acrylonitrile, maleic anhydride, N-substituted maleimides or mixtures thereof and the rubbers having glass transition temperatures < 10°C and being present in the form of at least partially crosslinked particles having an average particle diameter ($d_{50}$) of 0.05 to 20 $\mu$m
and

B) 100 to 0% by weight of one or more thermoplastic vinyl polymers, the monomers being selected from the group consisting of styrene, $\alpha$-methylstyrene, ring-substituted styrene, methyl methacrylate, acrylonitrile, (meth)-acrylonitrile, maleic anhydride, N-substituted maleimides or mixtures thereof, and

II.) 0.25 to 4 parts by weight of a mixture of

a) a component selected from at least one polyalkylene ether from the group consisting of unmodified polyalkylene ethers, polyalkylene ethers modified with radical formers, and polyalkylene ethers modified with acid groups (each of molecular weights (number average) of between 500 and 20 000) and

b) a phenolic antioxidant selected from octadecyl 3-(3',5'-di-tert-butyl-4-hydroxyphenyl)propionate and 2,4-dimethyl-6-(1-methylpentadecyl)phenol or mixtures thereof, where the ratio by weight of (a):(b) is 20: 1 to 1:1.

3. Thermoplastic moulding compositions according to Claim 1, comprising additives selected from at least one from the group consisting of pigments, fillers, lubricants, demoulding agents and flame retardants.

4. Use of the moulding compositions according to Claim 1 for producing moulded articles.

5. Moulded articles obtainable from moulding compositions according to Claim 1.

6. Process for preparing optionally rubber-modified polymers from vinylaromatics, other vinyl monomers and customary additions according to Claim 1, **characterized in that** 99.90 to 95 parts by weight of polymer I.) are admixed with 0.10 to 5 parts by weight of a mixture of components a) and b) in a ratio by weight of (a):(b) of 20:1 to 1:1 and the components are mixed in the melt state.

**Revendications**

1. Matières à mouler thermoplastiques contenant

I.) 99,90 à 95 parties en poids d'un polymère, éventuellement modifié par un caoutchouc, de composés vinylaromatiques et le cas échéant d'autres monomères vinyliques, consistant lui-même en

A) 0 à 100 % en poids d'un ou plusieurs polymères greffés consistant eux-mêmes en 10 à 95 % en poids (par rapport à A) d'un caoutchouc et 90 à 5 % en poids (par rapport à A) de monomères polymérisés par greffage sur le caoutchouc, ces monomères consistant en styrène, α-méthylstyrène, styrène substitué dans le noyau, méthacrylate de méthyle, (méth)acrylonitrile, anhydride maléique, maléimide substitué à l'azote ou mélange de tels monomères, les caoutchoucs ayant des températures de transition du second ordre inférieures à 10°C et étant sous forme de particules réticulées en partie au moins à un diamètre moyen ($d_{50}$) de 0,05 à 20 µm
et

B) 100 à 0 % en poids d'un ou plusieurs polymères vinyliques thermoplastiques dont les monomères sont choisis dans le groupe consistant en le styrène, l'α-méthylstyrène, un styrène substitué dans le noyau, le méthacrylate de méthyle, l'acrylonitrile, le méthacrylonitrile, l'anhydride maléique, un maléimide substitué à l'azote ou un mélange de tels monomères, et

II.) 0,10 à 5 parties en poids d'un mélange de

a) un composant, au moins un, choisi dans le groupe des éthers de polyalkylène non modifiés, des éthers de polyalkylène modifiés par des composés formant des radicaux libres et des éthers de polyalkylène modifiés par des groupes acides (dans tous les cas à des poids moléculaires moyens, moyenne en nombre, de 500 à 20 000) et

b) un antioxydant phénolique choisi parmi le 3-(3',5'-di-tert-butyl-4-hydroxyphényl)propionate d'octadécyle et le 2,4-diméthyl-6-(1-méthylpentadécyl)phénol ou leurs mélanges, à des proportions relatives en poids (a)/(b) allant de 20:1 à 1:1.

**2.** Matières à mouler thermoplastiques selon la revendication 1, contenant

I.) 99,75 à 96 parties en poids d'un polymère, éventuellement modifié par un caoutchouc, de composés vinylaromatiques et le cas échéant d'autres monomères vinyliques, et qui consiste lui-même en

A) 0 à 100 % en poids d'un ou plusieurs polymères greffés consistant eux-mêmes en 10 à 95 % en poids (par rapport à A) d'un caoutchouc et 90 à 5 % en poids (par rapport à A) de monomères polymérisés par greffage sur le caoutchouc, ces monomères consistant en le styrène, l'α-méthylstyrène, un styrène substitué dans le noyau, le méthacrylate de méthyle, le (méth)acrylonitrile, l'anhydride maléique, un maléimide substitué à l'azote ou un mélange de tels monomères, les caoutchoucs ayant des températures de transition du second ordre inférieures à 10°C et étant à l'état de particules réticulées en partie au moins à un diamètre moyen ($d_{50}$) de 0,05 à 20 µm
et

B) 100 à 0 % en poids d'un ou plusieurs polymères vinyliques thermoplastiques dont les monomères sont choisis dans le groupe consistant en le styrène, l'α-méthylstyrène, un styrène substitué dans le noyau, le méthacrylate de méthyle, l'acrylonitrile, le méthacrylonitrile, l'anhydride maléique, un maléimide substitué à l'azote ou un mélange de tels monomères, et

II.) 0,25 à 4 parties en poids d'un mélange de

a) un composant, au moins un, choisi dans le groupe des éthers de polyalkylène non modifiés, des éthers de polyalkylène modifiés par des composés formant des radicaux libres et des éthers de polyalkylène modifiés par des groupes acides (dans tous les cas à des poids moléculaires moyens, moyenne en nombre, de 500 à 20 000) et

b) un antioxydant phénolique choisi parmi le 3-(3',5'-di-tert-butyl-4-hydroxyphényl)propionate d'octadécyle et le 2,4-diméthyl-6-(1-méthylpentadécyl)phénol ou leurs mélanges, à des proportions relatives en poids (a)/(b) de 20:1 à 1:1.

**3.** Matières à mouler thermoplastiques selon la revendication 1, contenant des additifs, au moins un, choisi dans le groupe des pigments, des matières de charge, des agents lubrifiants, des agents de démoulage et des agents ignifugeants.

**4.** Utilisation des matières à mouler selon la revendication 1 pour la fabrication de corps moulés.

**5.** Corps moulés obtenus à partir des matières à mouler selon la revendication 1.

6. Procédé pour la préparation de polymères, éventuellement modifiés par un caoutchouc, de composés vinylaromatiques, d'autres monomères vinyliques, avec des additifs usuels, selon la revendication 1, **caractérisé en ce que**, à 99,90 à 95 parties en poids du polymère I) on ajoute et on mélange à l'état fondu 0,10 à 5 parties en poids d'un mélange des composants a) et b) à des proportions relatives en poids (a)/(b) de 20:1 à 1:1.